# EUROPEAN PATENT APPLICATION

(11) **EP 2 510 789 A1**
(43) Date of publication of application: **17.10.2012**
(21) Application number: 10835531.4
(22) Date of filing: 07.12.2010
(51) Int. Cl.: A01N 59/06, A01N 59/26

(54) **POWDER OF VITREOUS COMPOSITION HAVING BIOCIDAL ACTIVITY**

(30) Priority: 09.12.2009 ES 200931137
(71) Applicant: Consejo Superior De Investigaciones Científicas (CSIC), 28006 Madrid (ES)
(72) Inventor: MOYA CORRAL, Jose, E-28049 Madrid (ES); ESTEBAN, Leticia, E-28049 Madrid (ES); PECHARROMAN, Carlos, E-28049 Madrid (ES); MALPARTIDA, Francisco, E-28049 Madrid (ES)
(74) Representative: Pons Ariño, Angel
(86) International application number: PCT/ES2010/070810
(87) International publication number: WO 2011/070209

(57) **Abstract**

The present invention refers to the use of a powder of vitreous composition, characterised in that it has a minimum CaO content of 10% by weight, as biocide

## Description

The present invention refers to the use of a powder of vitreous composition as a biocide, characterised in that it has a minimum CaO content of 10 % by weight.

### STATE OF PRIOR ART

The use of glasses containing copper, silver or zinc content with bactericidal and fungicidal activity is known from the articles of Esteban-Tejeda L, Malpartida F, Esteban-Cubillo A, Pecharromán C and Moya JS, 2009, Nanotechnology 20 art. num.085103 (6pp); Esteban-Tejeda L, Malpartida F, Esteban-Cubillo A, Pecharromán C and Moya JS, 2009, Nanotechnology 20 505701doi:10.1088/0957- 4484/20/50/505701 (2009); Fang M, Chena JH, Xub XL, Yang PH and Hildebrand HF, 2006, International Journal of Antimicrobial Agents 27 513 - 17; Rai M, Yadav A and Gade A, 2009, Biotechnology Advances 27 76 - 83. Such copper, silver or zinc metal particles of can be toxic and/or harmful to the environment. Organic biocidal agents such as those of the triclosan type are also highly toxic and polluting: Greyshok AE and Vikesland PJ, 2006, Environ. Sci. Technol. 40 2615 - 22; Allmyr M, Panagiotidis G, Sparve E, Diczfalusy U and Sandborgh-Englund G, 2009, Basic and Clinical Pharmacology and Toxicology 105 339 - 44; Geens T, Roosens L, Neels H, Covaci A, 2009, Chemosphere 76 755 - 60.

In addition, according to published studies the presence of high concentrations of calcium in solution, Ca²⁺, interferes in enzyme activity, for example the enzyme β-glucan synthase, inhibiting the synthesis of sugars, thereby inhibiting the growth of microorganisms. In the case of yeasts, it also interferes in the germination of spores. The concentration of calcium necessary for causing a growth inhibition effect depends on the microorganism studied. [Droby S, Wisniewski ME, Cohen L, Weiss B, Touitou D, Eilam Y and Chalutz E, 1997, Phytopathology 87 [3] 310 - 5; Chardonnet CO, Sems CE and Conway WS, 1999, Phytochemistry 52 967 - 73; Kaile A, Pitt D and Khun PJ, 1992, Physicological and Molecular Olant Pathology 40 49 - 62].

Some authors [Bellantone M. et al., 2002, Antimicrob. Agents Chemother. 46 1940 - 5; Jones JR and Ehrenfried LM, 2006, J. Mater. Sci: Mater. Med 17 989 - 96] did not observe any biocidal activity in some bioglasses against *Escherichia coli, Pseudomonas aeruginosa* or *Staphylococcus aureus.* It is also well known that vitreous products with high silica content such as laboratory glass, bottles, etc. have no biocidal activity at all.

### DESCRIPTION OF THE INVENTION

The present invention provides a use of a powder of vitreous composition, with a minimum CaO content of 10 % by weight, as a biocide.

Therefore, an aspect of the present invention refers to the use of a vitreous powder that comprises: silicon oxide (SiO₂) and calcium oxide (CaO), with a content of CaO of over 10 % by weight, as a biocide.

"Vitreous powder" in the present invention is considered to be solid particles with glass composition with dimensions less than 500 µm so that their surface area is sufficient to interact with harmful microorganisms.

"Biocide" in the present invention is considered to be a chemical substance that destroys, neutralises, inhibits the action or exercises control of some other type over any harmful microorganism.

In a preferred embodiment, the biocidal action may be either bactericidal and/or fungicidal.

"Fungicide" in the present invention is considered to be a substance used to inhibit the growth or to kill fungi and moulds that are harmful to plants, animals or mankind.

"Bactericide" in the present invention is considered to be a substance used for the destruction of bacteria.

In case of being used as bactericide, in a more preferred embodiment the bactericidal effect acts on bacteria selected among either gram-positive, gram-negative or any of their combinations.

In a still more preferred embodiment, the gram-positive bacteria on which the vitreous powder acts as a bactericide may be either *Micrococcus luteus* or *Bacillus subtilis.*

In a still more preferred embodiment, the gram-negative bacterium on which the vitreous powder acts as a bactericide is *Escherichia coli.*

In another more preferred embodiment, the fungicidal effect acts against yeast, and in a still more preferred embodiment, the yeast is *Issatchenkia orientalis (Candida krusei).*

The present invention describes the biocidal activity of various powders of vitreous composition with high calcium content (over 10 % by weight of CaO) on three different types of microorganisms: *Escherichia coli* (gram-negative bacteria), *Micrococcus luteus* (gram-positive bacteria) and *Issatchenkia orientalis* (yeast).

The vitreous composition may additionally comprise phosphorous oxide (P₂O₅).

The vitreous powder may additionally include oxides selected from the list comprising: alumina (Al₂O₃), boron oxide (B₂O₃) potassium oxide (K₂O), sodium oxide (Na₂O), iron oxide (Fe₂O₃) magnesium oxide (MgO) and any oxides that are required to stabilise the glass structure.

Preferably, the grain size of the oxides used for the vitreous composition is less than 200 µm. More preferably, the grain size is between 0.05 and 32 µm.

The mechanism of action of this vitreous powder with high CaO content consists in that a particle of glass, due to the high calcium content, liberates Ca²⁺ ions at a gradual and controlled rate, causing, at the same time, a change in the pH of the medium. These glass particles may also adhere to the bacterial cell membrane, partially or totally interfering with its metabolism.

In a preferred embodiment, the use as a biocide of the vitreous powder as described above may be as applied in applications such as: containers, pharmaceutical drugs, medical devices, surgical implants, fabrics, air installations, swimming pools and transport, for applications in fields as diverse as agriculture, livestock farming, pharmacy, medicine, food, textiles and public use facilities.

The first advantage provided by the present invention compared to the current state of the art is the fact that it avoids the use of organic and/or metal nanoparticles such as silver or copper that can be toxic and/or harmful to the environment. The second advantage lies in the simplicity of the preparation process, which basically consists of the melting of a frit of a suitable composition and the subsequent stage of milling to achieve particle sizes of the order of 100 µm. Finally, another advantage is the biocompatibility of the particulate material obtained, making this an ideal material for application in surgical implants or in the food sector and/or its packaging, both for human and animal use.

Therefore, the object of the present invention is the use of a vitreous powder with a high calcium content (over 10 % by weight of CaO) for the preparation of a bactericidal and/or fungicidal composition that does not pollute and is not harmful to the environment as it decomposes into nontoxic substances in the soil by the action of environmental agents. This powder is useful as a disinfectant for applications belonging, for example but without limiting the scope of the present invention, to the following group: bactericidal and fungicidal applications in the agricultural sector, livestock farming, public use facilities (health centres and hospitals, transport, swimming pools, etc.), air conditioning equipment, plumbing pipes and fittings, paints, clothes, packaging (domestic, pharmaceutical, medical devices, etc.).

Throughout the description and the claims, the use of the word "comprise" and its variants is not intended to exclude other technical characteristics, additives, components or steps. For experts in the subject, other purposes, advantages and characteristics of the invention will follow in part from the description and in part from the practice of the invention. The following examples and figures are provided for illustration purposes and are not intended to limit the scope of the present invention.

### EXAMPLES

The invention is illustrated below with tests carried out by the inventors demonstrating the specificity and effectiveness of the vitreous powder as a biocide.

### Example 1. Bactericidal activity test against the gram-negative bacterium Escherichia coli.

Biocide assays were carried out on three vitreous composition powders (with average particle size less than 200 µm) with different compositions and high calcium content to evaluate their bactericidal activity against the gram-negative bacterium *E. coli*. Biocide assays were also carried out with a commercial soda-lime glass (commonly used in the manufacture of windows and bottles), with a CaO content of less than 10 % by weight in order to demonstrate that this glass has no biocidal activity. The chemical analysis of these glasses is shown below:

### 1. Glass A, with 15 % by weight of CaO.

This glass has the following chemical composition ( % weight): 47.6 % of SiO₂; 27.5 % of Na₂O; 14.9 % of CaO; 1 % of K₂O; 2 % of Al₂O₃; 6.9 % of B₂O₃ and 1.9 % of others.

### 2. Glass B, with 20 % by weight of CaO.

This glass has the following chemical composition (% weight): 43.5 % of SiO₂; 25.5 % of Na₂O; 19.9 % of CaO; 1 % of K₂O; 2 % of Al₂O₃; 8 % of B₂O₃ and 2.1 % of others.

### 3. Glass C, with 25 % by weight of CaO.

This glass has the following chemical composition (% weight): 39.1 % of SiO₂; 23.5 % of Na₂O; 24.9 % of CaO; 1 % of K₂O; 2 % of Al₂O₃; 9.4 % of B₂O₃ and 2.3 % of others.

### 4. Bioglass, with 24.2 % by weight of CaO.

This glass has the following chemical composition (% weight): 46.2 % of SiO₂; 22.6 % of Na₂O; 24.2 % of CaO; 6.21 % of P₂O₅ and 0.79 % of others.

### 5. Soda-lime glass, with 7.10 % by weight of CaO.

This glass has the following chemical composition (% weight): 72.79 SiO₂; 15.8 Na₂O; 7.10 CaO; 3.20 MgO; 1.06; B₂O₃ and 0.05 K₂O.

The biocide tests were carried out as follows:
From a stock solution kept at -80 °C, microorganisms were seeded in solid medium (9 cm diameter Petri dishes) containing 20 ml Luria Bertani (LB) medium with the following composition (% weight): 1 % tryptone; 0.5 % yeast extract; 1 % NaCl and 1.5 % agar. The plates were incubated for 18 hours at 37 °C. Next, colonies isolated from these plates were inoculated in 1 ml of liquid LB (for bacterial colonies) or 1ml liquid yeast extract peptone dextrose (YEPD) (composition % weight: 1 % yeast extract, 2 % peptone, 2 % dextrose) and were cultured at 37 °C for 6 hours to obtain the precultures at a density of between 10¹⁰ to10¹¹ viable colonies per millilitre of culture. In parallel, suspensions of 200 mg/ml of the three glasses in water were prepared and sterilised for 30 minutes at 125 °C. Finally, 10 µl of each of the microorganism precultures were inoculated into 1 ml of the liquid media (LB for bacteria, or YEPD for yeast). Lastly, 75 µl of the glass suspensions for assay were added to the cultures. Also, a control was prepared of the same medium with the glass being replaced by an equivalent volume of water. The different cultures were incubated by horizontal shaking, with extractions being carried out every 24 hours in order to titre the surviving microorganisms by plaquing serial dilutions from 10⁻¹ to 10⁻⁸ in solid LB medium.

The results obtained, represented as the logarithm of reduction of colony forming units (Table 1), show total disinfection (elimination of all colonies) after 48 hours for all the glasses with a CaO content of over 10 % by weight (Glass A, B, C and Bioglass). The soda-lime glass, however, with a CaO content of less than 10 % (by weight) did not show any biocidal activity.

**Table 1: Shows the logarithm of reduction of colony forming units (log η) of E. coli after 24 and 48 hours of biocide assay. The control medium was a medium composed only of the nutrient and the corresponding microorganisms, that is, it did not contain any biocidal substance.**

| | ***E. coli*** | | | | |
|---|---|---|---|---|---|
| | **Glass A** | **Glass B** | **Glass C** | **Bioglass** | **Soda-lime glass** |
| **24 h** | 8.79 | 6.75 | 7.35 | 10.78 | 0.00 |
| **48 h** | 11.68 | 9.7 | 11.32 | 10.78 | 0.00 |

### Example 2. Bactericidal activity test against the gram-positive bacterium Micrococcus luteus.

Following the previous process, biocide tests were carried out for the three types of glass previously described against the gram-positive bacterium *Micrococcus luteus.*

The results obtained, shown as the logarithm of reduction of colony forming units (Table 2), show a safe disinfection for all the glasses with a CaO content over 10 % by weight (Glass A, B, C and Bioglass), with a logarithm of reduction in colony forming units being log η > 4 after 48 hours of culture in contact with the glass. The soda-lime glass, however, with a CaO content of less than 10 % (by weight) did not show any biocidal activity.

**Table 2: Shows the logarithm of reduction of colony forming units of M. luteus after 24 and 48 hours of biocide assay.**

| | ***M. luteus*** | | | | |
|---|---|---|---|---|---|
| | **Glass A** | **Glass B** | **Glass C** | **Bioglass** | **Soda-lime glass** |
| **24 h** | 4.44 | 1.49 | 3.4 | 3.68 | 0.00 |
| **48 h** | 6.29 | 5.9 | 6.21 | 4.52 | 0.00 |

### Example 3. Biocide activity test against the yeast Issatchenkia orientalis (Candida krusei).

Following the previous process, biocide assays were carried out for the three types of glass previously described against the yeast *Issatchenkia orientalis.*

The results obtained, represented as the logarithm of reduction of colony forming units (Table 3) show safe disinfection (log η > 4) after 48 hours for all the glasses with a CaO content of over 10 % by weight (Glasses A, B, C and Bioglass). The soda-lime glass, however, with a CaO content of less than 10 % (by weight) did not show any biocidal activity.

**Table 3: Shows the logarithm of reduction of colony forming units of I. orientalis after 24 and 48 hours of biocide assay.**

| | ***I. orientalis*** | | | | |
|---|---|---|---|---|---|
| | **Glass A** | **Glass B** | **Glass C** | **Bioglass** | **Soda-lime glass** |
| **24 h** | 5.07 | 3.4 | 4.18 | 4.57 | 0.00 |
| **48 h** | 9.6 | 6.1 | 4.66 | 5.18 | 0.00 |

## Claims

1. Use of a vitreous powder comprising at least silicon oxide (SiO₂) and calcium oxide (CaO), with a content of CaO of over 10 % by weight, as a biocide.

2. Use of the vitreous powder according to claim 1 as a bactericide and/or fungicide.

3. Use of the vitreous powder according to claim 2 wherein the bactericidal effect occurs on bacteria selected among either gram-positive, gram-negative or any of their combinations.

4. Use of the vitreous powder according to claim 3 wherein the gram-positive bacteria may be either *Micrococcus luteus* or *Bacillus subtilis.*

5. Use of the vitreous powder according to claim 3 wherein the gram-negative bacterium is *Escherichia coli.*

6. Use of the vitreous powder according to claim 2 wherein the fungicidal effect occurs on yeasts.

7. Use of the vitreous powder according to claim 6 wherein the yeast is *Issatchenkia orientalis.*

8. Use of the vitreous powder according to any of the claims 1 to 7 **characterised in that** it additionally comprises phosphorous oxide (P₂O₅).

9. Use of the vitreous powder according to any of the claims 1 to 8 **characterised in that** it additionally comprises oxides selected from the list comprising: sodium oxide (Na₂O), potassium oxide (K₂O), magnesium oxide (MgO), iron oxide (Fe₂O₃) alumina (Al₂O₃) and boron oxide (B₂O₃).

10. Use of the vitreous powder according to any of the claims 1 to 9 wherein the particle size is less than 200 µm.

11. Use of the vitreous powder according to any of the claims 1 to 10 wherein the application as biocide may be on containers, pharmaceutical drugs, medical devices, surgical implants, fabrics, air installations, swimming pools or transport.
